# EUROPEAN PATENT SPECIFICATION

(11) **EP 2 061 829 B1**
(45) Date of publication and mention of the grant of the patent: **14.07.2010**
(21) Application number: 07803038.4
(22) Date of filing: 30.08.2007
(51) Int. Cl.: C08G 79/02, C08G 79/04, C08L 85/02, C08K 5/529, C08K 5/5373, C07F 9/59

(54) **LIQUID POLYMERIC PHOSPHITES AND PHOSPHONITES AS STABILIZERS**
FLÜSSIGE POLYMERE PHOSPHITE UND PHOSPHONITE ALS STABILISATOREN
PHOSPHITES ET PHOSPHONITES POLYMÈRES LIQUIDES UTILISÉS COMME AGENTS STABILISANTS

(30) Priority: 08.09.2006 EP 06120376
(43) Date of publication of application: 27.05.2009
(73) Proprietor: BASF SE, 67056 Ludwigshafen (DE)
(72) Inventor: FINK, Jochen, 69226 Nussloch (DE); PFAENDNER, Rudolf, 64668 Rimbach (DE); KING, Roswell Easton, Pleasantville, NY 10570 (US); SHUM, Sai Ping, Monroe Township, NJ 08831 (US); PADEGIMAS, Stanley J., Mobile, AL 36695 (US)
(86) International application number: PCT/EP2007/059027
(87) International publication number: WO 2008/028858

(56) References cited:
- EP-A1- 0 601 973
- EP-A1- 0 685 519
- US-A- 4 472 548

## Description

The present invention relates to novel liquid polymeric phosphites and phosphonites, to compositions comprising an organic material, preferably a synthetic polymer, and said novel liquid polymeric phosphites and phosphonites, as well as the use thereof for stabilizing organic materials against oxidative, thermal or light-induced degradation.

Organic phosphites and phosphonites are known in industry as costabilizes, secondary antioxidants and processing stabilizers for synthetic polymers such as for example polyolefins. Liquid phosphites or phosphonites are especially preferred in industry for their easy handling and the excellent compatibility of these compounds in synthetic polymers. Trisnonylphenyl phosphite (TNPP) has been widely used for this purpose. However, it has been found recently, that transformation products of TNPP, like for example nonylphenol, may be hormonally active in animals. Because of the increasing pressure of the hygiene and food industry plastic manufacturers would like to phase out this liquid stabilizer.

It has now been found new polymeric phosphites and phosphonites which are liquid at room temperature and could be used as TNPP replacement for stabilizing organic materials agains oxidative, thermal or light-induced degradation.

The present invention therefore relates to polymeric compounds of the formula I 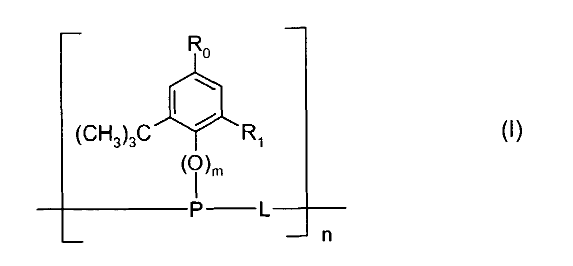 wherein
L is -X-R₄-Y- ,
R₀ is hydrogen, C₁-C₂₅alkyl or 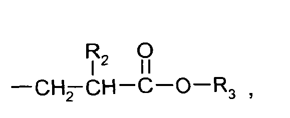
R₁ is hydrogen or C₁-C₄alkyl,
R₂ is hydrogen or methyl,
R₃ is C₁-C₂₅alkyl, C₂-C₂₅alkenyl; with oxygen, sulfur or 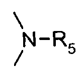 interrupted C₂-C₂₅alkyl; or C₅-C₁₂cycloalkyl,
R₄ is C₁-C₂₄alkylene, C₂-C₂₄alkenylene; with oxygen, sulfur or 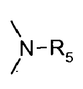 interrupted C₂-C₂₄alkylene:
R₅ is hydrogen or C₁-C₈alkyl,
X is -O-, -S- or 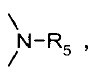
Y is -O-, -S- or 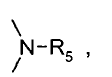
m is 0 or 1, and
n is an integer from 2 to 100.

Alkyl having up to 25 carbon atoms is a branched or unbranched radical, for example methyl, ethyl, propyl, isopropyl, n-butyl, sec-butyl, isobutyl, tert-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, 2-ethylhexyl, 1,1-,3-trimethylhexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl, hexadecyl, heptadecyl, octadecyl, icosyl or docosyl.

Alkenyl having 2 to 25 carbon atoms is a branched or unbranched radical such as, for example, propenyl, 2-butenyl, 3-butenyl, isobutenyl, n-2,4-pentadienyl, 3-methyl-2-butenyl, n-2-octenyl, n-2-dodecenyl, iso-dodecenyl, oleyl, n-2-octadecenyl or n-4-octadecenyl.

C₂-C₂₅Alkyl interrupted with oxygen, sulfur or 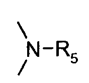 is, for example, CH₃-O-CH₂CH₂-, CH₃-S-CH₂CH₂-, CH₃-N(CH₃)-CH₂CH₂-, CH₃-O-CH₂CH₂-O-CH₂CH₂-, CH₃-(O-CH₂CH₂-)₂O-CH₂CH₂-, CH₃-(O-CH₂CH₂-)₃O-CH₂CH₂- or CH₃-(O-CH₂CH₂-)₄O-CH₂CH₂-.

C₅-C₁₂Cycloalkyl is, for example, cyclopentyl, cyclohexyl, cycloheptyl, cyclooctyl, cyclononyl, cyclodecyl, cycloundecyl or cyclodocecyl. Preference is given to cyclohexyl.

C₁-C₂₄Alkylene is a branched or unbranched radical, for example methylene, ethylene, propylene, trimethylene, tetramethylene, pentamethylene, hexamethylene, heptamethylene, octamethylene, decamethylene, dodecamethylene or octadecamethylene.

C₂-C₂₄Alkenylene is, for example, vinylene, methylvinylene, octenylethylene or dodecenyl-ethylene. C₂-C₈Alkenylene is preferred.

C₂-C₂₄Alkylene interrupted by oxygen, sulfur or 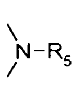 is, for example, -CH₂-O-CH₂-, -CH₂-S-CH₂-, -CH₂-N(CH₃)-CH₂-, -CH₂-O-CH₂CH₂-, -CH₂CH₂-O-CH₂CH₂-, -CH₂CH₂-O-CH₂CH₂-O-CH₂CH₂-, -CH₂CH₂-(O-CH₂CH₂-)₂O-CH₂CH₂-, -CH₂CH₂-(O-CH₂CH₂-)₃O-CH₂CH₂-, -CH₂CH₂-(O-CH₂CH₂-)₄O-CH₂CH₂₋, -CH₂CH₂-S-CH₂CH₂- or -CH₂CH₂-N(CH₃)-CH₂CH₂-.

Preferred are compounds of the formula I, wherein
R₀ is 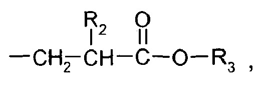
R₂ is hydrogen or methyl,
R₃ is C₁-C₂₅alkyl, C₂-C₂₅alkenyl; with oxygen, sulfur or 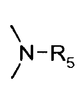 interrupted C₂-C₂₅alkyl; or C₅-C₁₂cycloalkyl, and
R₅ is hydrogen or C₁-C₈alkyl.

Of interest are compounds of the formula I, wherein
R₃ is C₁-C₁₈alkyl, C₂-C₁₈alkenyl; with oxygen, sulfur or 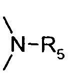 interrupted C₂-C₁₈alkyl; or C₅-C₈cycloalkyl,
R₄ is C₁-C₁₈alkylene, C₂-C₁₈alkenylene; with oxygen, sulfur or 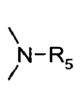 interrupted C₂-C₁₈alkylene; and
R₅ is hydrogen or C₁-C₈alkyl.

Preference is given to polymeric compounds of the formula I wherein R₂ is hydrogen.

Preference is also given to polymeric compounds of the formula I wherein R₃ is C₁-C₈alkyl.

Likewise preferred are polymeric compounds of the formula I wherein R₄ is C₂-C₈alkylene; or with 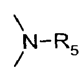 interrupted C₄-C₆alkylene.

Particular preference is given to polymeric compounds of the formula I wherein X and Y are the same and are -O-.

Of particular interest are polymeric compounds of the formula I wherein
L is -X-R₄-Y-,
R₁ is hydrogen or tert-butyl,
R₂ is hydrogen,
R₃ is C₁-C₈alkyl,
R₄ is C₂-C₈alkylene; or with 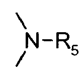 interrupted C₄-C₆alkylene;
R₅ is hydrogen or methyl,
X is -O- ,
Y is -O-,
m is 1, and
n is an integer from 2 to 50.

The novel polymeric compounds of the formula I can be prepared in a manner known per se.

The invention furthermore relates to a preferred process for the preparation of a polymeric compound of the formula I, which comprises reacting a compound of the formula II or a mixture of compounds of the formula II 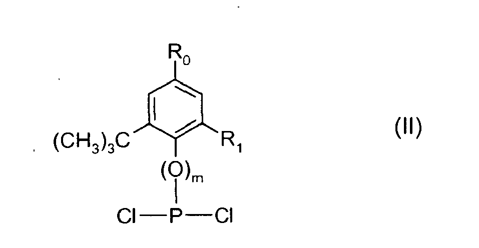 wherein the general symbols are as defined above, with a compound of the formula III or a mixture of compounds of the formula III

H-L-H (III)

wherein L is as defined above.

The reaction is carried out in the melt or in the presence of a suitable organic, polar or apolar, aprotic solvent. The reaction is preferably carried out in the presence of a base at temperatures between -20°C and boiling point of the solvent, in particular at temperatures between 20 and 150°C.

Bases such as amines can simultaneously also be used as solvent.

The base can be employed in various amonts, from catalytic via stoichiometric amounts up to an excess of several times the molar amount with respect to the compounds of the formula II or the compounds of the formula III employed. The hydrogen chloride formed during the reaction is, if appropriate, converted through the base into chloride, which can be removed by filtration and/or washing with a suitable aqueous or solid phase; a second, water-immiscible solvent can also be employed here. The products are expediently isolated by evaporating the organic phase and drying the residue.

Suitable solvents for carrying out the reaction include hydrocarbons (for example mesitylene, toluene, xylene, hexane, pentane or other petroleum ether fractions), halogenated hydrocarbons (for example di- or trichloromethane, 1,2-dichloroethane, 1,1,1-trichloroethane or chlorobenzene), ethers (for example diethyl ether, dibutyl ether or tetrahydrofuran), ketones (for example acetone, ethyl methyl ketone, diethyl ketone, methyl propyl ketone or cyclohexanone), furthermore acetonitrile, butyl acetate, dimethyl formamide, dimethyl sulfoxide or N-methylpyrrolidone.

Suitable bases include primary, secondary and in particular tertiary amines (for example trimethylamine, triethylamine, tributylamine, N,N-dimethylaniline, N,N-diethylaniline or pyridine), hydrides (for example lithium hydride, sodium hydride or potassium hydride) or alkoxides (for example sodium methoxide).

If hydrides (for example sodium hydride, sodium borohydride or lithium aluminium hydride), alkali metals, alkali metal hydroxides or sodium methoxide are used as bases, the corresponding alkoxide of the compound of the formula III can first be formed; any reaction product formed (for example water or methanol) is removed by distillation (for example as an azeotrope with toluene) before the reaction with the compound of the formula II.

The structural composition of the polymeric compounds of the formula I depends on the reaction conditions, for example the solvent or the reaction temperature, and the molar mixing ratio and the concentration of the compounds of the formulae II and III. For example the viscosity of the liquid oligomeric phosphite can be adjusted by the molecular weight, the comonomer composition and a mixture of compounds of formula III. If a liquid phosphite or phosphonite of lower viscosity is targeted, preferably an oligomer of lower molecular weight and/or long chain compound of formula III and/or mixture of several molecules of compounds of formula III are used. On the other side, if a liquid phosphite or phosphonite of higher viscosity is targeted, preferably a higher molecular weight, shorter chain compounds of formula III and/or a single molecule of formula III are used.

Both the compounds of the formula II and the compounds of the formula III can be used in a molar excess. However, it is preferred to use the compound of the formula III in excess. Preferred molar mixing ratios between the compounds of the formulae II and III are from 1.9 : 1 to 1 : 1.9, particularly preferably 1.05 : 1 to 1 : 1.8, in particular from 1 : 1.1 to 1 : 1.3.

The molecular weight distribution of the polymeric compounds of the formula I depends on the molecular weight, composition and synthesis path. In general, the molecular weight distribution is uncritical with regard to the targeted properties, however it might be that for specific applications narrow molecular weight distributions (Mw/Mn < 5) or bimodal or multimodal distributions are preferred.

The present invention therefore also relates to polymeric products obtainable by reacting a compound of the formula II or a mixture of compounds of the formula II with a compound of the formula III or a mixture of compounds of the formula III.

The preparation of the compounds of the formula II and III is known.

The compounds of the formula II in which m = 1 are known or can be prepared by processes known per se, as described, for example, in DE-A-3 928 291 or by R.A. Bartlett et al., J. Amer. Chem. Soc. 109 (19), 5699 (1987).

The compounds of the formula II in which m = 0 are likewise known per se or can be prepared by processes known per se, as described, for example, in Org. Syntheses Coll. Vol. IV, 784 (1963) and by T. Weil et al., Helv. Chim. Acta 1952, 1412, or F. Nief et al., Tetrahedron 47 (33), 6673 (1991).

The compounds of the formula II required for the preparation of the novel polymeric compounds of the formula I can be prepared in situ analogously to the abovementioned literature procedures, and reacted further, without isolation, with a compound of the formula III to give the polymeric compounds of the formula I.

L can have identical or different meanings in the recurring structural units of the formula I.

If the compound of the formula III is used in excess, the terminal groups of the polymeric compounds of the formula I are, as shown in the formula IV 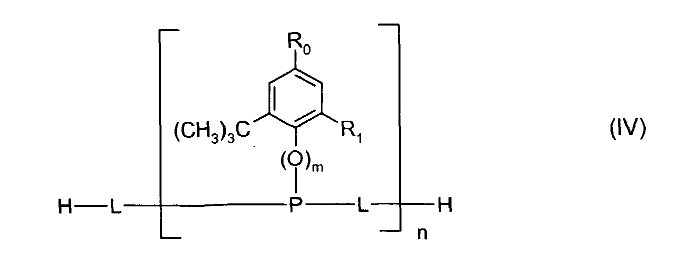 predominantly hydroxyl groups or amine groups, which, if desired, can easily be derivatized by known methods. For example, these terminal groups can be esterified by means of acid halides, for example carboxylic acid halides or phosphoric acid halides, or acid anhydrides; reacted with isocyanates to give the urethanes; reacted with isothiocyanates to give the thio-urethanes; or reacted with sulfonyl halides and, for example, thionyl chloride to give the halides.

If the compound of the formula II is used in excess, the terminal groups of the polymeric compounds of the formula I in some cases also carry reactive 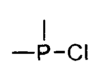 groups.

The chlorine atoms can be substituted by additional nucleophiles, for example phenols, alcohols, amines, mercaptans or dialkyl phosphites, by known methods with elimination of hydrochloric acid. Suitable alcohols are C₁-C₈alkanols, for example methanol, ethanol, n-propanol or n-butanol.

For the adjustment of the molecular weight of the polymeric phosphites or phosphonites of the formula I it can be useful to replace partially H-L-H by the above mentioned nucleophiles. In this case the regulation of the molecular weight takes place by blocking the end-group and stopping the molecular weight increase of the growing polymer chain. The quantity of the additional nucleophiles depends on the molecular weight targeted and the ratio of compounds of formula II and formula III. Preferably less than 20 mol % of formula III are substituted by the nuclephiles.

The polymeric compounds of the formula I can also be in the form of a ring system in which the hydroxyl terminal or the amine terminal group, respectively, in L cyclizes with the other chain end 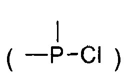 with elimination of hydrochloric acid.

The present invention preferably relates to polymeric compounds of the formula V 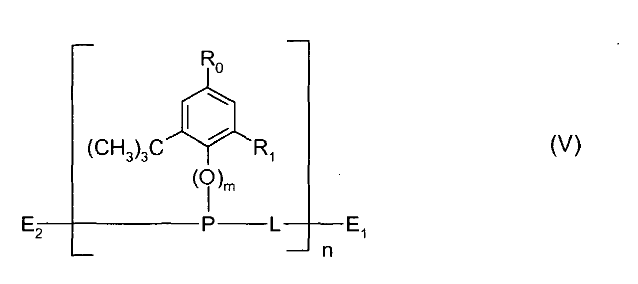 in which L, R₀, R₁, R₂, R₃, m and n are as defined above,
the terminal group E₁ is hydrogen, 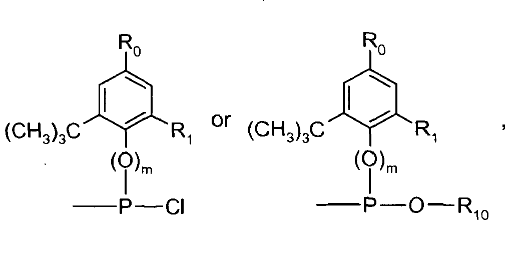 the terminal group E₂ is -L-H, 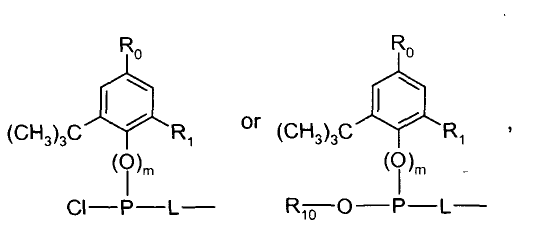 or furthermore the terminal groups E₁ and E₂ together form a direct bond (cyclic compounds); and
R₁₀ is C₁-Caalkyl.

Particular preference is given to polymeric compounds of the formula V in which the terminal group E₁ is hydrogen, and the terminal group E₂ is -L-H, in which L is as defined above.

The novel liquid compounds of the formula I are suitable for the stabilization of organic materials against oxidative; thermal or light-induced degradation.

Illustrative examples of such materials are:
1. Polymers of monoolefins and diolefins, for example polypropylene, polyisobutylene, polybut-1-ene, poly-4-methylpent-1-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature.
   b) catalytic polymerisation using a catalyst that normally contains one or more than one metal of groups Ivb, Vb, Vib or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, lia and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethyleneacrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
   Homopolymers and copolymers from 1.) - 4.) may have any stereostructure including syndiotactic, isotactic, hemi-isotactic or atactic; where atactic polymers are preferred. Stereoblock polymers are also included.
5. Polystyrene, poly(p-methylstyrene), poly(α-methylstyrene).
6. Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; where atactic polymers are preferred. Stereoblock polymers are also included.
6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/styrene.
6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
6c. Hydrogenated aromatic polymers derived from hydrogenation of polymers mentioned under 6a.).
   Homopolymers and copolymers may have any stereostructure including syndiotactic, isotactic, hemi-isotactic or atactic; where atactic polymers are preferred. Stereoblock polymers are also included.
7. Graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS.
19. Polycarbonates and polyester carbonates.
20. Polysulfones, polyether sulfones and polyether ketones.
21. Crosslinked polymers derived from aldehydes on the one hand and phenols, ureas and melamines on the other hand, such as phenol/formaldehyde resins, urea/formaldehyde resins and melamine/formaldehyde resins.
22. Drying and non-drying alkyd resins.
23. Unsaturated polyester resins derived from copolyesters of saturated and unsaturated dicarboxylic acids with polyhydric alcohols and vinyl compounds as crosslinking agents, and also halogen-containing modifications thereof of low flammability.
24. Crosslinkable acrylic resins derived from substituted acrylates, for example epoxy acrylates, urethane acrylates or polyester acrylates.
25. Alkyd resins, polyester resins and acrylate resins crosslinked with melamine resins, urea resins, isocyanates, isocyanurates, polyisocyanates or epoxy resins.
26. Crosslinked epoxy resins derived from aliphatic, cycloaliphatic, heterocyclic or aromatic glycidyl compounds, e.g. products of diglycidyl ethers of bisphenol A and bisphenol F, which are crosslinked with customary hardeners such as anhydrides or amines, with or without accelerators.
27. Natural polymers such as cellulose, rubber, gelatin and chemically modified homologous derivatives thereof, for example cellulose acetates, cellulose propionates and cellulose butyrates, or the cellulose ethers such as methyl cellulose; as well as rosins and their derivatives.
28. Blends and alloys of the aforementioned polymers (polyblends), for example PP/EPDM, Polyamide/EPDM or ABS, PVC/EVA, PVC/ABS, PVC/MBS, PC/ABS, PC/Polyester, PBTP/- ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.
29. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellitates) and also mixtures of synthetic esters with mineral oils in any weight ratios, typically those used as spinning compositions, as well as aqueous emulsions of such materials.
30. Aqueous emulsions of natural or synthetic rubber, e.g. natural latex or latices of carboxylated styrene/butadiene copolymers.

Further objects of the invention are therefore compositions comprising a) an organic material which is susceptible to oxidative, thermal or light-induced degradation, and b) at least one polymeric compound of the formula I or at least one polymeric product obtainable by reacting a compound of the formula II or a mixture of compounds of the formula II with a compound of the formula III or a mixture of compounds of the formula III.

The organic materials to be protected are preferably natural, semi-synthetic or preferably synthetic polymers. Particular preference is given to thermoplastic polymers, in particular polyolefins, in particular polypropylene and polyethylene.

Particular emphasis should be placed on the action of the novel polymeric compounds of the formula I against thermal and oxidative degradation, in particular on heating, as occurs in the processing of thermoplastics. The novel polymeric compounds of the formula I are therefore highly suitable for use as processing stabilizers.

The polymeric compounds of the formula I are preferably added to the organic material to be stabilized in amounts of from of 0.01 to 10%, for example from 0.01 to 5%, preferally from 0.025 to 3%, in particular from 0.025 to 1%, based on the weight of the organic material to be stabilized.

In addition to the liquid polymeric compounds of the formula I, the novel compositions can comprise further additives, such as for example the following:

### 1. Antioxidants

1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.

1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.

1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.

1.4. Tocopherols, for example α-tocopherol, β-tocopherol, γ-tocopherol, δ-tocopherol and mixtures thereof (vitamin E).

1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis(3,6-di-sec-amylphenol), 4,4'-bis(2,6-dimethyl-4-hydroxyphenyl)-disulfide.

1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methy)-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra(5-tert-butyl-4-hydroxy-2-methylphenyl)pentane.

1.7. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.

1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malonate, didodecylmercaptoethyl-2,2-bis(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.

1.9. Aromatic hydroxybenzyl compounds, for example 1,3,5-tris(3,5-di-tert-butyl-4-hydroxybenzyl)₋2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.

1.10. Triazine compounds, for example 2,4-bis(octylmercapto)-6-(3,5-di-tert-butyl-4-hydroxy-anilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.

1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.

1.12. Acylaminophenols, for example 4-hydroxylauranilide, 4-hydroxystearanilide, octyl N-(3,5-di-tert-butyl-4-hydroxyphenyl)carbamate.

1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]-undecane.

1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)ox-amide, 3-thiaundecanol, 3-thiapentadecanol, trimethylhexanediol, trimethylolpropane, 4-hydroxymethyl-1-phospha-2,6,7-trioxabicyclo[2.2.2]octane.

1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)ox-amide, 3-thiaundecanol, 3-thiapentadecanol, trimethylhexanediol, trimethylolpropane, 4-hydroxymethyl-1-phospha-2,6,7-trioxabicyclo[2.2.2]octane.

1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]propionyloxy)ethyl]oxamide (Naugard^{®}XL-1, supplied by Uniroyal).

1.18. Ascorbic acid (vitamin C)

1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octylphenothiazines, N-allylphenothiazine, N,N,N',N'-tetraphenyl-1,4-diaminobut-2-ene, N,N-bis(2,2,6,6-tetramethylpiperid-4-yl-hexamethylenediamine, bis(2,2,6,6-tetramethylpiperid-4-yl)sebacate, 2,2,6,6-tetramethylpiperidin-4-one, 2,2,6,6-tetramethylpiperidin-4-ol.

### 2. UV absorbers and light stabilizers

2.1. 2-(2'-Hydroxyphenyl)benzotriazoles, for example 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis(α,α-dimethylbenzyl)-2'-hydroxyphenyl)benzotriazole, 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 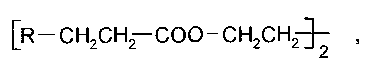 where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)phenyl]-benzotriazole; 2-[2'-hydroxy-3'-(1,1,3,3-tetramethylbutyl)-5'-(α,α-dimethylbenzyl)phenyl]benzotriazole.

2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.

2.3. Esters of substituted and unsubstituted benzoic acids, for example 4-tert-butylphenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.

2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate and N-(β-carbomethoxy-β-cyanovinyl)-2-methylindoline.

2.5. Nickel compounds, for example nickel complexes of 2,2'-thiobis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenylundecylketoxime, nickel complexes of 1-phenyl-4-lauroyl-5-hydroxypyrazole, with or without additional ligands.

2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)-malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)-ethane, the condensate of 2-chloro-4,6-di-(4-n-butylamino-1,2,2,6,6-pentamethylpiperidyl)-1,3,5-triazine and 1,2-bis(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. [192268-64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cycloundecyl-1-oxa-3,8-diaza-4-oxospiro-[4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, a diester of 4-methoxymethylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-α-olefin copolymer with 2,2,6,6-tetramethyl-4-aminopiperidine or 1,2,2,6,6-pentamethyl-4-aminopiperidine.

2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.

2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tridecyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2-hydroxypropyloxy]phenyl}-4,6-bis(2,4-dimethylphenyl)-1,3,5-triazine, 2-[2-hydroxy-4-(2-ethylethoxy)phenyl]-4,6-diphenyl-1,3,5-triazine.

3. Metal deactivators, for example N,N'-diphenyloxamide, N-salicylal-N'-salicyloyl hydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.

4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-dicumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)-pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo-[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.

5. Phosphines, for example 1,3-bis(diphenylphosphino)-2,2-dimethyl-propane,

6. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.

7. Nitrones, for example N-benzyl-alpha-phenylnitrone, N-ethyl-alpha-methylnitrone, N-octyl-alpha-heptylnitrone, N-lauryl-alpha-undecylnitrone, N-tetradecyl-alpha-tridecylnitrone, N-hexadecyl-alpha-pentadecylnitrone, N-octadecyl-alpha-heptadecylnitrone, N-hexadecyl-alpha-heptadecylnitrone, N-ocatadecyl-alpha-pentadecylnitrone, N-heptadecyl-alpha-heptadecylnitrone, N-octadecyl-alpha-hexadecylnitrone, nitrone derived from N,N-dialkylhydroxylamine derived from hydrogenated tallow amine.

8. Thiosynergists, for example dilauryl thiodipropionate or distearyl thiodipropionate.

9. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.

10. Polyamide stabilizers, for example copper salts in combination with iodides and/or phosphorus compounds and salts of divalent manganese.

11. Basic co-stabilizers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.

12. Nucleating agents, for example inorganic substances, such as talcum, metal oxides, such as titanium dioxide or magnesium oxide, phosphates, carbonates or sulfates of, preferably, alkaline earth metals; organic compounds, such as mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzylidene)sorbitol, 1,3:2,4-di(paramethyldibenzylidene)sorbitol, and 1,3:2,4-di(benzylidene)sorbitol.

13. Fillers and reinforcing agents, for example calcium carbonate, silicates, glass fibres, glass bulbs, asbestos, talc, kaolin, mica, barium sulfate, metal oxides and hydroxides, carbon black, graphite, wood flour and flours or fibers of other natural products, synthetic fibers.

14. Other additives, for example plasticisers, lubricants, emulsifiers, pigments, rheology additives, catalysts, flow-control agents, optical brighteners, flameproofing agents, antistatic agents blowing agents and infrared (IR) adsorbers.

Preferred IR absorbers are for example pigments, dyes or organometallic compounds. Examples of such pigments are for example disclosed in JP-A-2003221523. Examples of IR absorbing dyes are disclosed for example in JP-A-2003327865 or EP-A-1 306 404. IR absorbing organometallic compounds are for example disclosed in EP-A-1 266 931 or Chemical Abstract 117;112529.

15. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839; EP-A-0591102 or EP-A-1291384 or 3-[4-(2-acetoxyethoxy)phenyl]-5,7-di-tert-butylbenzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)-benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethylphenyl)-5,7-di-tert-butylbenzofuran-2-one or 3-(2-acetyl-5-isooctylphenyl)-5-iso-octylbenzofuran-2-one.

The further additives are typically used in concentrations of 0.01 to 10 %, based on the total weight of the material to be stabilized.

The novel liquid polymeric compounds of the formula I can be used in particular together with phenolic antioxidants, light stabilizers and/or processing stabilizers.

Incorporation of component (b) and, if desired, further additives into the synthetic polymers is carried out by known methods, for example before or during compounding, extrusion, co-extrusion or else by applying the dissolved or dispersed compounds to the synthetic polymer, if appropriate with subsequent slow evaporation of the solvent.

The present invention also relates to a composition in the form of a masterbatch or concentrate comprising component (a) in an amount of from 5 to 90 % and component (b) in an amount of from 5 to 80 % by weight.

Component (b) and, if desired, further additives, can also be added before or during polymerisation or before crosslinking.

Component (b), with or without further additives, can be incorporated in pure form or encapsulated in waxes, oils or polymers into the synthetic polymer.

Component (b), with or without further additives, can also be sprayed onto the synthetic polymer. It is able to dilute other additives (for example the conventional additives indicated above) or their melts so that they too can be sprayed together with these additives onto the polymer. Addition by spraying on during the deactivation of the polymerization catalysts is particularly advantageous, it being possible to carry out spraying using, for example, the steam used for deactivation.

In the case of spherically polymerized polyolefins it may, for example, be advantageous to apply component (b), with or without other additives, by spraying.

The synthetic polymers prepared in this way can be employed in a wide variety of forms, for example as foams, films, fibres, tapes, moulding compositions, as profiles or as binders for coating materials, especially powder coatings, adhesives, putties or especially as thick-layer polyolefin mouldings which are in long-term contact with extractive media, such as, for example, pipes for liquids or gases, films, fibres, geomembranes, tapes, profiles or tanks.

The preferred thick-layer polyolefin mouldings have a layer thickness of from 1 to 50 mm, in particular from 1 to 30 mm, for example from 2 to 10 mm.

The compositions according to the invention can be advantageously used for the preparation of various shaped articles. Examples are:
I-1) Floating devices, marine applications, pontoons, buoys, plastic lumber for decks, piers, boats, kayaks, oars, and beach reinforcements.
I-2) Automotive applications, in particular bumpers, dashboards, battery, rear and front linings, moldings parts under the hood, hat shelf, trunk linings, interior linings, air bag covers, electronic moldings for fittings (lights), panes for dashboards, headlamp glass, instrument panel, exterior linings, upholstery, automotive lights, head lights, parking lights, rear lights, stop lights, interior and exterior trims; door panels; gas tank; glazing front side; rear windows; seat backing, exterior panels, wire insulation, profile extrusion for sealing, cladding, pillar covers, chassis parts, exhaust systems, fuel filter / filler, fuel pumps, fuel tank, body side mouldings, convertible tops, exterior mirrors, exterior trim, fasteners / fixings, front end module, glass, hinges, lock systems, luggage / roof racks, pressed/stamped parts, seals, side impact protection, sound deadener / insulator and sunroof.
I-3) Road traffic devices, in particular sign postings, posts for road marking, car accessories, warning triangles, medical cases, helmets, tires.
I-4) Devices for plane, railway, motor car (car, motorbike) including furnishings.
I-5) Devices for space applications, in particular rockets and satellites, e.g. reentry shields.
I-6) Devices for architecture and design, mining applications, acoustic quietized systems, street refuges, and shelters.
II-1) Appliances, cases and coverings in general and electric/electronic devices (personal computer, telephone, portable phone, printer, television-sets, audio and video devices), flower pots, satellite TV bowl, and panel devices.
II-2) Jacketing for other materials such as steel or textiles.
II-3) Devices for the electronic industry, in particular insulation for plugs, especially computer plugs, cases for electric and electronic parts, printed boards, and materials for electronic data storage such as chips, check cards or credit cards.
II-4) Electric appliances, in particular washing machines, tumblers, ovens (microwave oven), dish-washers, mixers, and irons.
II-5) Covers for lights (e.g. street-lights, lamp-shades).
II-6) Applications in wire and cable (semi-conductor, insulation and cable-jacketing).
II-7) Foils for condensers, refrigerators, heating devices, air conditioners, encapsulating of electronics, semi-conductors, coffee machines, and vacuum cleaners.
III-1) Technical articles such as cogwheel (gear), slide fittings, spacers, screws, bolts, handles, and knobs.
III-2) Rotor blades, ventilators and windmill vanes, solar devices, swimming pools, swimming pool covers, pool liners, pond liners, closets, wardrobes, dividing walls, slat walls, folding walls, roofs, shutters (e.g. roller shutters), fittings, connections between pipes, sleeves, and conveyor belts.
III-3) Sanitary articles, in particular shower cubicles, lavatory seats, covers, and sinks.
III-4) Hygienic articles, in particular diapers (babies, adult incontinence), feminine hygiene articles, shower curtains, brushes, mats, tubs, mobile toilets, tooth brushes, and bed pans.
III-5) Pipes (cross-linked or not) for water, waste water and chemicals, pipes for wire and cable protection, pipes for gas, oil and sewage, guttering, down pipes, and drainage systems.
III-6) Profiles of any geometry (window panes) and siding.
III-7) Glass substitutes, in particular extruded or co-extruded plates, glazing for buildings (monolithic, twin or multiwall), aircraft, schools, extruded sheets, window film for architectural glazing, train, transportation, sanitary articles, and greenhouse.
III-8) Plates (walls, cutting board), extrusion-coating (photographic paper, tetrapack and pipe coating), silos, wood substitute, plastic lumber, wood composites, walls, surfaces, furniture, decorative foil, floor coverings (interior and exterior applications), flooring, duck boards, and tiles.
III-9) Intake and outlet manifolds.
III-10) Cement-, concrete-, composite-applications and covers, siding and cladding, hand rails, banisters, kitchen work tops, roofing, roofing sheets, tiles, and tarpaulins.
IV-1) Plates (walls and cutting board), trays, artificial grass, astroturf, artificial covering for stadium rings (athletics), artificial floor for stadium rings (athletics), and tapes.
IV-2) Woven fabrics continuous and staple, fibers (carpets / hygienic articles / geotextiles / monofilaments; filters; wipes / curtains (shades) / medical applications), bulk fibers (applications such as gown / protection clothes), nets, ropes, cables, strings, cords, threads, safety seat-belts, clothes, underwear, gloves; boots; rubber boots, intimate apparel, garments, swimwear, sportswear, umbrellas (parasol, sunshade), parachutes, paraglides, sails, "balloon-silk", camping articles, tents, airbeds, sun beds, bulk bags, and bags.
IV-3) Membranes, insulation, covers and seals for roofs, tunnels, dumps, ponds, dumps, walls roofing membranes, geomembranes, swimming pools, curtains (shades) / sun-shields, awnings, canopies, wallpaper, food packing and wrapping (flexible and solid), medical packaging (flexible & solid), airbags/safety belts, arm- and head rests, carpets, centre console, dashboard, cockpits, door, overhead console module, door trim, headliners, interior lighting, interior mirrors, parcel shelf, rear luggage cover, seats, steering column, steering wheel, textiles, and trunk trim.
V) Films (packaging, dump, laminating, agriculture and horticulture, greenhouse, mulch, tunnel, silage), bale wrap, swimming pools, waste bags, wallpaper, stretch film, raffia, desalination film, batteries, and connectors.
VI-1) Food packing and wrapping (flexible and solid), bottles.
VI-2) Storage systems such as boxes (crates), luggage, chest, household boxes, pallets, shelves, tracks, screw boxes, packs, and cans.
VI-3) Cartridges, syringes, medical applications, containers for any transportation, waste baskets and waste bins, waste bags, bins, dust bins, bin liners, wheely bins, container in general, tanks for water / used water / chemistry / gas / oil / gasoline / diesel; tank liners, boxes, crates, battery cases, troughs, medical devices such as piston, ophthalmic applications, diagnostic devices, and packing for pharmaceuticals blister.
VII-1) Extrusion coating (photo paper, tetrapack, pipe coating), household articles of any kind (e.g. appliances, thermos bottle / clothes hanger), fastening systems such as plugs, wire and cable clamps, zippers, closures, locks, and snap-closures.
VII-2) Support devices, articles for the leisure time such as sports and fitness devices, gymnastics mats, ski-boots, inline-skates, skis, big foot, athletic surfaces (e.g. tennis grounds); screw tops, tops and stoppers for bottles, and cans.
VII-3) Furniture in general, foamed articles (cushions, impact absorbers), foams, sponges, dish clothes, mats, garden chairs, stadium seats, tables, couches, toys, building kits (boards / figures / balls), playhouses, slides, and play vehicles.
VII-4) Materials for optical and magnetic data storage.
VII-5) Kitchen ware (eating, drinking, cooking, storing).
VII-6) Boxes for CD's, cassettes and video tapes; DVD electronic articles, office supplies of any kind (ball-point pens, stamps and ink-pads, mouse, shelves, tracks), bottles of any volume and content (drinks, detergents, cosmetics including perfumes), and adhesive tapes.
VII-7) Footwear (shoes / shoe-soles), insoles, spats, adhesives, structural adhesives, food boxes (fruit, vegetables, meat, fish), synthetic paper, labels for bottles, couches, artificial joints (human), printing plates (flexographic), printed circuit boards, and display technologies.
VII-8) Devices of filled polymers (talc, chalk, china clay (kaolin), wollastonite, pigments, carbon black, TiO₂ mica, nanocomposites, dolomite, silicates, glass, asbestos).

Of interest are compositions comprising as component (a) fibers and fabrics used in nonwoven medical fabric and related apparel (surgical gowns, drapes, bandages), contstruction fabrics (house wrapping, roofing, swimming-pool wrapping) and home furnishing (carpets, table linens, shower curtains).

Of special interest are compositions comprising as component (a) fibers and nonwovens.

Thus, a further embodiment of the present invention relates to a shaped article, in particular a film, pipe, profile, bottle, tank or container, fiber containing a composition as described above.

A further embodiment of the present invention relates to a molded article containing a composition as described above. The molding is in particular effected by injection, blow, compression, roto-molding or slush-molding or extrusion.

As mentioned above, the organic materials to be protected are preferably organic polymers, particularly synthetic polymers. Thermoplastic materials, in particular polyolefins, are particularly advantageously protected. In particular, the excellent effectiveness of the polymeric compounds of the formula I as processing stabilizers (heat stabilizers) should be emphasized. For this purpose, they are advantageously added to the polymer before or during processing thereof. However, other polymers (for example elastomers) or lubricants or hydraulic fluids can also be stabilized against degradation, for example light-induced or thermo-oxidative degradation. Elastomers are given in the above list of possible organic materials.

Suitable lubricants and hydraulic fluids are based, for example, on mineral or synthetic oils or mixtures thereof. The lubricants are known to the person skilled in the art and are described in the relevant specialist literature, for example in Dieter Klamann, "Schmiermittelstoffe und verwandte Produkte" [Lubricants and Related Products] (Verlag Chemie, Weinheim, 1982), in Schewe-Kobek, "Das Schmiermittel-Taschenbuch" [The Lubricant Handbook] (Dr. Alfred Hüthig-Verlag, Heidelberg, 1974) and in "Ullmanns Enzyklopädie der technischen Chemie" [Ullmann's Encyclopedia of Industrial Chemistry], volume 13, pages 85 - 94 (Verlag Chemie, Weinheim, 1977).

A preferred embodiment of the present invention is therefore the use of a liquid polymeric compound of the formula I or a polymeric product obtainable by reacting a compound of the formula II or a mixture of compounds of the formula II with a compound of the formula III or a mixture of compounds of the formula III, for protecting organic materials against oxidative, thermal or light-induced degradation.

The novel liquid polymeric compounds of the formula I are distinguished by pronounced excellent hydrolysis stability and advantageous colouring behaviour, i.e. low discoloration of the organic materials during processing.

Organic materials which have been stabilized by means of the polymeric compounds of the formula I are particularly well protected agains light-induced degradation.

The present invention therefore also relates to a process for stabilizing an organic material against oxidative, thermal or light-induced degradation, which comprises incorporating in, or applying to, said material at least one polymeric compound of the formula I or at least a polymeric product obtainable by reacting a compound of the formula II or a mixture of compounds of the formula II with a compound of the formula III or a mixture of compounds of the formula III.

The preferred liquid polymeric compounds of the formula I and optionally further additives, in the process for stabilizing organic materials are the same as those described for the composition.

The following examples illustrate the invention further. Parts or percentages relate to weight. Further general remarks:

In order to remove oxygen and moisture all polymerization vessels are evacuated and flushed with Argon prior to use. The reaction mixtures are then polymerized under argon atmosphere. At the start of the polymerization reaction, all starting materials are homogeneously dissolved. Conversion is determined by removing unreacted monomers or salts from the polymeric phosphites or phosphonites by filtration and by drying in vacuo (0.002 Torr) at least for 60 minutes. The resulting liquids are then weighed. Characterization of the polymeric phosphites and phosphonites is carried out by ³¹P-NMR using a a BRUKER AVANCE 200 INSTRUMENT and Gel Permeation Chromatography (GPC). The latter is performed using RHEOS 4000 of FLUX INSTRUMENTS. Tetrahydrofuran (THF) is used as a solvent and is pumped at 1 ml/minute. Two chromatography columns are put in series: type Pigel 5 µm mixed-C of POLYMER INSTRUMENTS, Shropshire, United Kingdom. Measurements are performed at 40°C. The columns are calibrated with low polydispersity polystyrenes having Mn from 200 to 2 million Dalton. Detection is carried out using a RI-Detector ERC-7515A of ERCATECH AG at 30°C.

### Example 1: Preparation of compound 101.

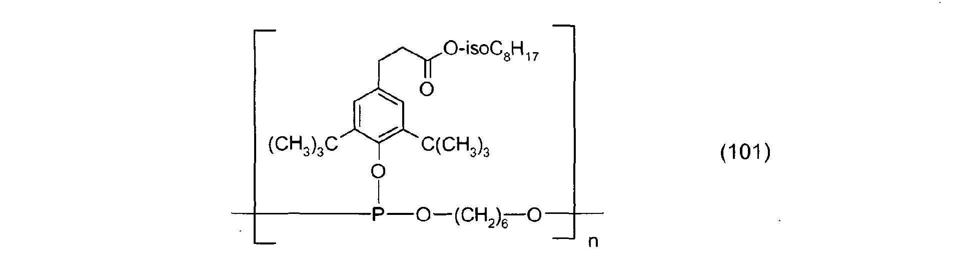

In a three necked round bottom flask equipped with a mechanical stirrer, a dropping funnel, a condenser and a thermometer is added 31.25 g (0.08 mol) of 3-(3,5-di-tert-butyl-4-hydroxyphenyl)propionic acid isooctylester and 22.3 ml (0.16 mol) of triethylamine dissolved in 240 ml of toluene. The solution is stirred and heated up to 50°C. A solution of 7.0 g (0.08 mol) of PCl₃ in 40 ml of toluene is added dropwise at 50°C to the reaction mixture. The reaction mixture turned into a yellow suspension. After stirring over night at 50°C the ³¹P-NMR signal at 203 ppm indicates that PCl₃ is fully reacted.

To this suspension is added dropwise a mixture of 9.45 g (0.08 mol) of 1,6-hexanediol and 22.3 ml (0.16 mol) of triethylamine at 50°C. After 4 hours the ³¹P-NMR indicates that the educt (signal at 205 ppm) has fully reacted and the signals between 141 and 143 ppm (polymeric phosphites) appear. In order to remove all possible chloride end groups, 1 ml of methanol is added and the reaction mixture stirred for 30 minutes. After filtration of the precipitate (ammonium salt), the filtrate is concentrated using a rotary evaporator at 40°C. The residue is dissolved in heptane, filtered and evaporated again to give the compound 101 as a yellow liquid. The molecular weight is approximately 10000 g/mol and is determined via GPC.

### Example 2: Preparation of compound 102.

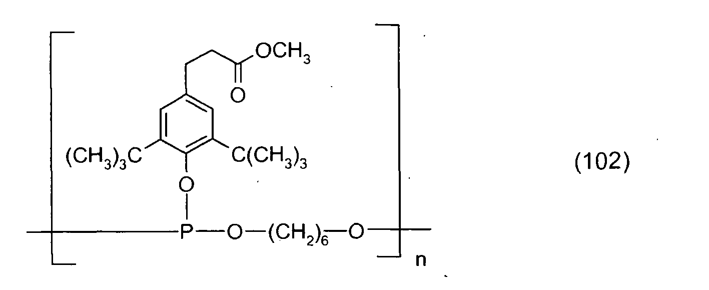

Compound 102 is prepared in analogy to compound 101 according to Example 1 by using 3-(3,5-di-tert-butyl-4-hydroxyphenyl)propionic acid methylester instead of the corresponding isooctylester. Compound 102 is a yellow liquid with a molecular weight of approximately 9000 g/mol (determined via GPC).

### Example 3: Preparation of a compound 103.

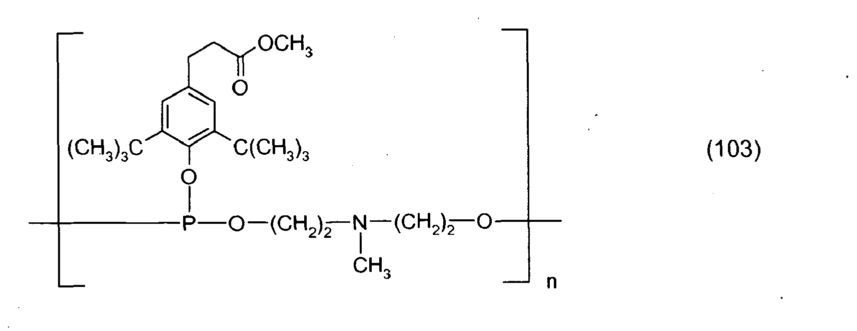

In a three necked round bottom flask equipped with a mechanical stirrer, a dropping funnel, a condenser and a thermometer is added 23.39 g (0.08 mol) of 3-(3,5-di-tert-butyl-4-hydroxyphenyl)propionic acid methylester and 22.3 ml (0.16 mol) of triethylamine dissolved in 240 ml of toluene. The solution is stirred and heated up to 50°C. A solution of 7.0 g (0.08 mol) of PCl₃ in 40 ml of toluene is added dropwise at 50°C to the reaction mixture. The reaction mixture turned into a yellow suspension. After stirring over night at 50°C the ³¹P-NMR signal at 205 ppm indicates that PCl₃ is fully reacted.

To this suspension is added dropwise a mixture of 9.45 g (0.08 mol) of N-methyldiethanolamine and 22.3 ml (0.16 mol) of triethylamine at 50°C. After 4 hours the ³¹P-NMR indicates that the reaction is completed and signals between 138 and 142 ppm (polymeric phosphites) appear. In order to remove all possible chloride end groups, 1 ml of methanol is added and the reaction mixture stirred for 30 minutes. After filtration of the precipitate (ammonium salt), the filtrate is concentrated using a rotary evaporator at 40°C. The residue is dissolved in heptane, filtered and evaporated again to give the compound 103 as a yellow liquid. The molecular weight is approximately 3000 g/mol and is determined via GPC.

### Example 4: Preparation of compound 104.

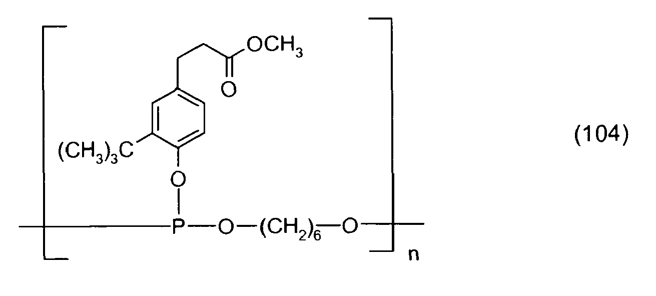

Compound 104 is prepared in analogy to compound 101 according to Example 1 by using 3-(3-tert-butyl-4-hydroxyphenyl)propionic acid methylester instead of 3-(3,5-di-tert-butyl-4-hydroxyphenyl)propionic acid isooctylester. Compound 104 is a yellow liquid with a molecular weight of approximately 25000 g/mol (determined via GPC).

### Example 5: Preparation of compound 105.

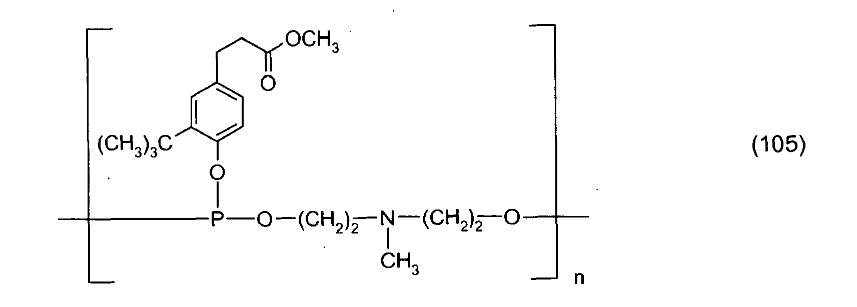

Compound 105 is prepared in analogy to compound 103 according to Example 3 by using 3-(3-tert-butyl-4-hydroxyphenyl)propionic acid methylester instead of 3-(3,5-di-tert-butyl-4-hydroxyphenyl)propionic acid methylester. Compound 105 is a white liquid with a molecular weight of approximately 1400 g/mol (determined via GPC).

### Example 6: Preparation of compounds 106 - 110.

In analogy to the previous Examples 1 - 5 the following oligomeric phosphites are prepared:

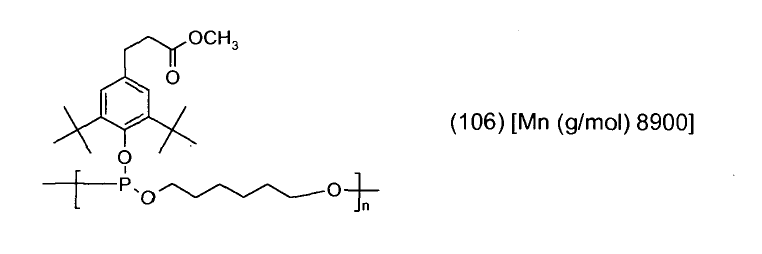

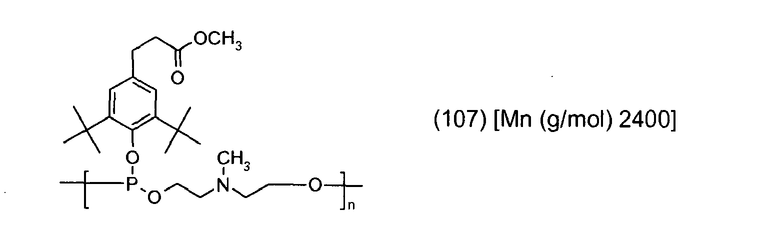

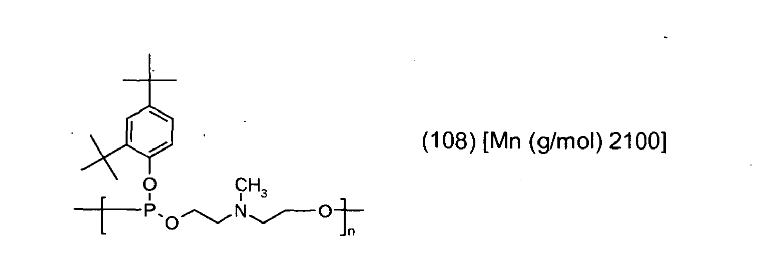

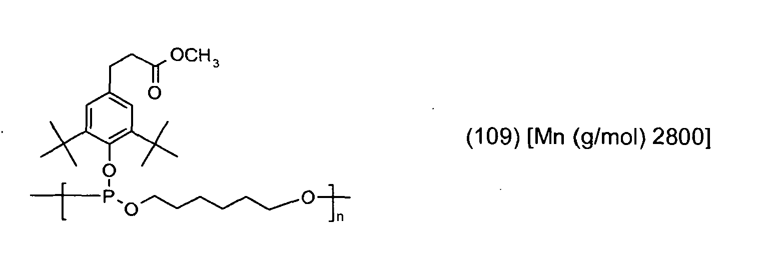

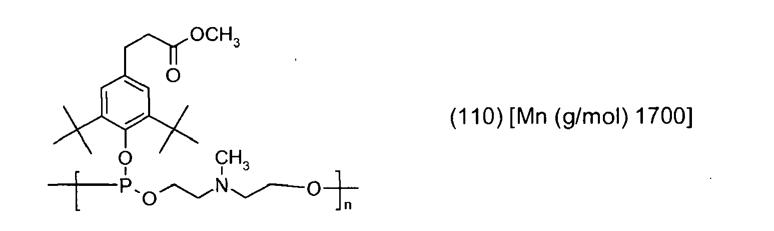

### Example 7: Preparation of compound 111.

Into a solution of 139.0g (1000 mmol) of phosphorus trichloride, 6.0g (60 mmol) of N-methylpyrrolidinone in 30g of toluene is added dropwise a solution of 103.7g (500 mmol) of 2,4-di-tert-butylphenol in 70g of toluene at 25°-30°C for 40 minutes. The resulting solution is heated to 30°C and sparged with nitrogen for additional 2.5 hours. Upon cooling of the reaction to ambient temperature, excess phosphorus trichloride is removed in vaccuo (150mmHg) at 60°C. Into the resulting phosphorodichloridite solution is then added 112g (1100 mmol) of triethylamine followed by a filtration to remove any solid. Into the filtrate is added dropwise 100g (500 mmol) of PEG 200 while maintaining the reaction temperature below 50°C. After the addition, the reaction mixture is allowed to stir for additional 30minutes. A total of 6.0g (100 mmol) of isopropanol is then added to the mixture and stirred for additional 15 minutes. The reaction mass is filtered and the filtrate is concentrated in vaccuo at 70°-75°C to give a yellow, viscous syrup (compound 111). ³¹P NMR (400MHz) (Benzene-d₆) (ppm): 135. GPC: MW = 26638.

### Example 8: Preparation of compound 112.

The procedure of Example 7 is repeated using 72.4g (525 mmol) of phosphorus trichloride, 4.0g (12 mmol) of tetrabutylammonium bromide, 103.4g (500 mmol) of 2,4-di-tert-butylphenol, 103g (1020 mmol) of triethylamine, 120g (400 mmol) of PEG 300, 6.0 g (100 mmol) of isopropanol and total of 110g toluene. A yellow, viscous syrup is collected (compound 112). ³¹P NMR (400MHz) (Benzene-*d*₆) (ppm): 147. GPC: MW = 4668.

### Example 9: Preparation of compound 113.

The procedure of Example 7 is repeated using 35.3g (260 mmol) of phosphorus trichloride, 72.1g (250 mmol) of methyl 3,5-di-tert-butyl-4-hydroxybenzenepropionate, 103g (1020 mmol) of triethylamine, 50g (250 mmol) of PEG 200, 4.0 (67 mmol) of isopropanol and total of 300g toluene. A yellow viscous syrup is collected (compound 113). ³¹P NMR (400MHz) (Benzene-*d*₆) (ppm): 156. GPC: MW = 5458.

### Example 10: Preparation of compound 114.

The procedure of Expample 7 is repeated using 140.1g (1000 mmol) of phosphorus trichloride, 6.3g (64 mmol) of N-methylpyrrolidinone, 121g (500 mmol) of methyl 3-tert-butyl-4-hydroxybenzenepropanate, 113g (1020 mmol) of triethylamine, 100g (500 mmol) of PEG 200, 6.0 g (100 mmol) of isopropanol and total of 175g toluene. A yellow, viscous syrup is collected (compound 114). ³¹P NMR (400MHz) (Benzene-*d*₆) (ppm): 147. GPC: MW = 6312.

### Example 11: Preparation of compound 115.

The procedure of Expample 7 is repeated using 27.5g (200 mmol) of phosphorus trichloride, 0.49g (5 mmol) of N-methylpyrrolidinone, 23.6g (100 mmol) of methyl 3-tert-butyl-4-hydroxybenzenepropanate, 30.4g (300 mmol) of triethylamine, 15g (100 mmol) of triethylene glycol, 0.60g (10 mmol) of isopropanol and total of 200g of toluene. A yellow, viscous syrup is collected (compound 115). ³¹P NMR (300MHz) (Benzene-*d*₆) (ppm): 137. GPC: MW = 6845.

### Example 12: Preparation of compound 116.

The procedure of Expample 7 is repeated using 27.5g (200 mmol) of phosphorus trichloride, 0.49g (5 mmol) of N-methylpyrrolidinone, 23.6g (100 mmol) of methyl 3-tert-butyl-4-hydroxybenzenepropanate, 30.4g (300 mmol) of triethylamine, 10.6g (100 mmol) of diethylene glycol, 0.60g (10 mmol) of isopropanol and total of 200g of toluene. A yellow, viscous syrup is collected (compound 116). ³¹P NMR (300MHz) (Benzene-*d*₆) (ppm): 137. GPC: MW = 3891.

### Example 13: Preparation of compound 117.

The procedure of Example 7 is repeated using 35.3g (260 mmol) of phosphorus trichloride, 72.1g (250 mmol) of methyl 3,5-di-tert-butyl-4-hydroxybenzenepropionate, 51.0g (510 mmol) of triethylamine, 38g (250 mmol) of triethylene glycol, 4.0g (67 mmol) of isopropanol and total of 300g of toluene. A yellow, viscous syrup is collected (compound 117). ³¹P NMR (300MHz) (Benzene-*d*₆) (ppm): 158. GPC: MW = 1187

### Example 14: Preparation of compound 118.

The procedure of Example 7 is repeated using 69.5 (500 mmol) of phosphorus trichloride, 3.0g (30 mmol) of N-methylpyrrolidinone, 51.8 (250 mmol) of 2,4-di-tert-butylphenol, 56.8 (560 mmol) of triethylamine, 37.5 (250 mmol) of triethylene glycol, 3.0 g (50 mmol) of isopropanol and total of 110g toluene. A yellow, viscous syrup is collected (compound 118). GPC: MW = 27045.

### Example 15: Stabilization of multiple-extruded polypropylene.

1.3 kg of polypropylene poweder [Profax 6501 (RTM)] which has been prestabilized with 0.025% of Irganox 1076 (RTM) [n-octadecyl 3-[3,5-di-tert-butyl-4-hydroxyphenyl]propionate] (having a melt index of 3.2 measured at 230°C/2.16 kg), are blended with 0.05% or Irganox 1010 (RTM) [pentaerythrityl tetrakis[3-(3,5-di-tert-butyl-4-hydroxyphenyl)propionate], 0.05% of calcium stearate, 0.03% of dihydrotalcite [DHT 4A (RTM), Kyowa Chemical Industry co., Ltd., Mg_{4.5}Al₂(OH)₁₃CO₃ 3.5 H₂O] and 0.05% of a compound of the formula I according to Table 1. This blend is then extruded at 100 rpm in an extruder having a cylinder diameter of 20 mm and a length of 400 mm, the 3 heating zones being adjusted to the following temperatures: 260°C, 270°C, 280°C. The extrudate is cooled by drawing it through a water bath and then granulated. This granulate is repeatedly extruded. The melt index is measured after 3 extrusions (230°C/2.16 kg). A substantial increase in the melt index denotes pronounced chain degradation, i.e. poor stabilization. The results are summarized in Table 1.

**Table 1:**

| Example | Compound of formula I | Melt index after 3 extrusions |
|---|---|---|
| 15a^{a)} | none | 19.0 |
| 15b^{b)} | compound 101 | 8.2 |
| 15c^{b)} | compound 102 | 7.9 |
| 15d^{b)} | compound 103 | 8.0 |
| 15e^{b)} | compound 104 | 8.1 |
| 15f^{b)} | compound 105 | 7.9 |

| | | |
|---|---|---|
| a) Comparison Example. b) Example according to the invention. | | |

### Example 16: Stabilization of multiple-extruded linear low density polyethylene.

1 kg of a metallocene catalyzed ethylene/hexane linear low density polyethylene powder [1 melt index (190°C/2.16kg); 0.918 density] which was devoid of any additives was dry blended with a base stabilization system comprised of 0.05% of Irganox 1076 (RTM) [n-octadecyl 3-[3,5-di-tert-butyl-4-hydroxyphenyl]propionate] and 0.08% of a polymer processing aid, Dynamar FX-5920A (RTM). To this base stabilized system was then added equimolar concentrations of the compounds according to Table 2. This well blended mixture is then extruded at 30 rpm under nitrogen in an extruder having a cylinder diameter of 25.4mm and a length of 400 mm, the heating zones being adjusted so that the melt temperature was 190°C. The extrudate is cooled by drawing it through a water bath and then granulated. This zero pass granulate is then repeatedly extruded five times in the same extruder at 30 rpm, open to air, with the heating zones being adjusted so that the melt temperature was 260°C. The melt index (190°C/2.16 kg) is measured after 5 extrusions. A decrease in the melt index denotes molecular weight increase or crosslinking, i.e. poor stabilization. The results are summarized in Table 2.

**Table 2:**

| Example | Compounds of formula I | Melt index after 1^{st} extrusion open to air 260°C | Melt index after 3^{rd} extrusion open to air 260°C | Melt index after 5^{th} extrusion open to air 260°C |
|---|---|---|---|---|
| 16a^{a)} | none | 0.89 | 0.81 | 0.75 |
| 16b^{b)} | 106 | 1.01 | 0.98 | 0.93 |
| 16c^{b)} | 107 | 1.03 | 1.01 | 0.95 |
| 16d^{b)} | 108 | 1.04 | 1.01 | 0.98 |
| 16e^{b)} | 109 | 1.01 | 0.98 | 0.96 |
| 16f^{b)} | 110 | 1.00 | 0.95 | 0.88 |

| | | | | |
|---|---|---|---|---|
| a) Comparison Example. b) Example according to the invention. | | | | |

### Example 17: Post extrusion color stabilization of linear low density polyethylene.

The zero pass extrudate from Example 16 was compression molded into 1 mm films. One set was put into a gas fade chamber and exposed to oxides of nitrogen at 60°C; another set was put into an oven at 60°C without oxides of nitrogen as a control. The color was measured every seven days where an increase in color suggests lack of proper protection of the polymer and the phenolic antioxidant; i.e. poor stabilization. The results are summarized in Tables 3 and 4.

**Table 3:**

| Example | Compound of formula I | Yellowness index after 0 days in gas fade chamber 60°C | Yellowness index after 14 days in gas fade chamber 60°C | Yellowness index after 28 days in gas fade chamber 60°C |
|---|---|---|---|---|
| 17a^{a)} | none | 1.16 | 9.07 | 14.27 |
| 17b^{b)} | 106 | 1.20 | 3.03 | 9.39 |
| 17c^{b)} | 107 | 1.53 | 4.95 | 10.01 |
| 17d^{b)} | 108 | 1.41 | 7.83 | 14.75 |
| 17e^{b)} | 109 | 1.10 | 4.23 | 11.06 |
| 17f^{b)} | 110 | 1.42 | 7.75 | 14.53 |

**Table 4:**

| Example | Compound of formula I | Yellowness index after 0 days during oven aging; 60°C | Yellowness index after 14 days during oven aging; 60°C | Yellowness index after 28 days during oven aging; 60°C |
|---|---|---|---|---|
| 17g^{a)} | none | 1.35 | 1.66 | 1.94 |
| 17h^{b)} | 106 | 1.07 | 1.28 | 1.37 |
| 17i^{b)} | 107 | 1.41 | 1.76 | 2.13 |
| 17j^{b)} | 108 | 1.41 | 2.10 | 2.52 |
| 17k^{b)} | 109 | 1.18 | 1.32 | 1.41 |
| 17l^{b)} | 110 | 1.32 | 1.82 | 2.26 |

| | | | | |
|---|---|---|---|---|
| a) Comparison Example. b) Example according to the invention. | | | | |

## Claims

1. A polymeric compound of the formula I 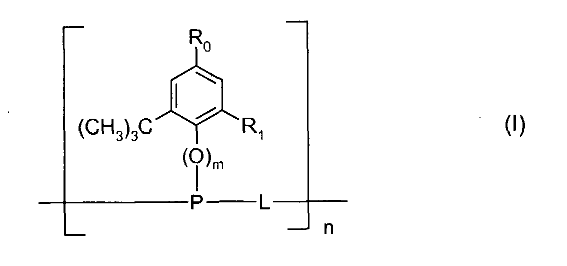 wherein
L is -X-R₄-Y-,
R₀ is hydrogen, C₁-C₂₅alkyl or 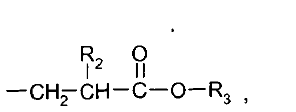
R₁ is hydrogen or C₁-C₄alkyl,
R₂ is hydrogen or methyl,
R₃ is C₁-C₂₅alkyl, C₂-C₂₅alkenyl; with oxygen, sulfur or 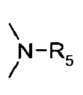 interrupted C₂-C₂₅alkyl; or C₅-C₁₂cycloalkyl,
R₄ is C₁-C₂₄alkylene, C₂-C₂₄alkenylene; with oxygen, sulfur or 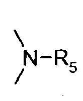 interrupted C₂-C₂₄alkylene;
R₅ is hydrogen or C₁-C₈alkyl,
X is -O-, -S- or 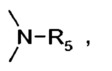
Y is -O-, -S- or 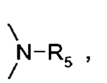
m is 0 or 1, and
n is an integer from 2 to 100.

2. A compound according to claim 1, wherein
R₀ is 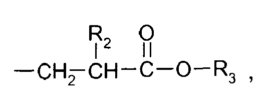
R₂ is hydrogen or methyl,
R₃ is C₁-C₂₅alkyl, C₂-C₂₅alkenyl; with oxygen, sulfur or 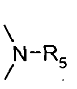 interrupted C₂-C₂₅alkyl; or C₅-C₁₂cycloalkyl, and
R₅ is hydrogen or C₁-C₈alkyl.

3. A compound according to claim 1, wherein
R₃ is C₁-C₁₈alkyl, C₂-C₁₈alkenyl; with oxygen, sulfur or 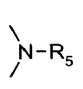 interrupted C₂-C₁₈alkyl; or C₅-C₈cycloalkyl,
R₄ is C₁-C₁₈alkylene, C₂-C₁₈alkenylene; with oxygen, sulfur or 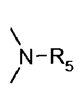 interrupted C₂-C₁₈alkylene; and
R₅ is hydrogen or C₁-C₈alkyl.

4. A compound according to claim 1, wherein R₂ is hydrogen.

5. A compound according to claim 1, wherein R₃ is C₁-C₈alkyl.

6. A compound according to claim 1, wherein R₄ is C₂-C₈alkylene; or with 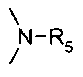 interrupted C₄-C₆alkylene.

7. A compound according to claim 1, wherein X and Y are -O-.

8. A compound according to claim 1, wherein
L is -X-R₄-Y-,
R₁ is hydrogen or tert-butyl,
R₂ is hydrogen,
R₃ is C₁-C₈alkyl,
R₄ is C₂-C₈alkylene; or with 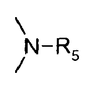 interrupted C₄-C₆alkylene;
R₅ is hydrogen or methyl,
X is -O- ,
Y is -O-,
m is 1, and
n is an integer from 2 to 50.

9. A process for the preparation of a polymeric compound of the formula I according to claim 1, which comprises reacting a compound of the formula II or a mixture of compounds of the formula II 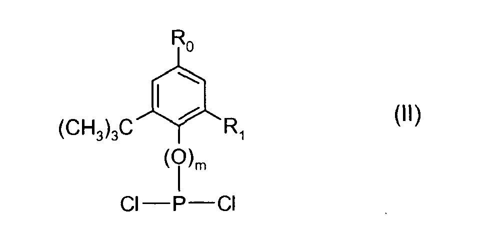 wherein the general symbols are as defined in claim 1, with a compound of the formula III or a mixture of compounds of the formula III
H-L-H (III)
wherein L is as defined in claim 1.

10. A polymeric product obtainable by reacting a compound of the formula II or a mixture of compounds of the formula II with a compound of the formula III or a mixture of compounds of the formula III 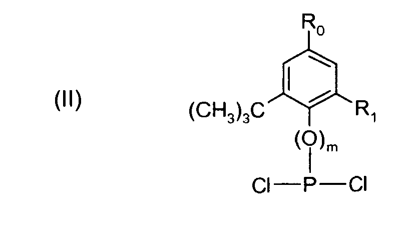
H-L-H (III)
wherein the general symbols are as defined in claim 1.

11. A composition comprising
a) an organic material which is susceptible to oxidative, thermal or light-induced degradation, and
b) at least one polymeric compound of the formula I according to claim 1 or at least one polymeric product according to claim 9.

12. A composition according to claim 11 comprising further additives in addition to components (a) and (b).

13. A composition according to claim 12, wherein the further additives are selected from the group consisting of phenolic antioxidants, light stabilizers and processing stabilizers.

14. A composition according to claim 11, wherein component (a) is a natural, semi-synthetic or synthetic polymer.

15. A composition according to claim 11, wherein component (a) is a thermoplastic polymer.

16. A composition according to claim 11, wherein component (b) is present in an amount of from 0.01 to 10 %, based on the weight of component (a).

17. A process for stabilizing an organic material against oxidative, thermal or light-induced degradation, which comprises incorporating in, or applying to, said material at least one polymeric compound of the formula I as defined in claim 1 or of at least a polymeric product according to claim 10.

18. Use of a polymeric compound of the formula I according to claim 1 or of a polymeric product as defined in claim 10 as stabilizer for protecting organic materials against oxidative, thermal or light-induced degradation.

## Patentansprüche

1. Polymere Verbindung der Formel I 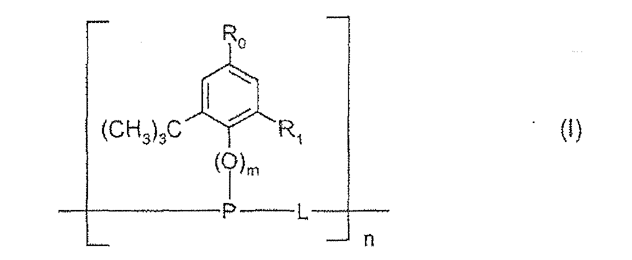 worin
L für -X-R₄-Y- steht,
R₀ für Wasserstoff, C₁-C₂₅-Alkyl oder 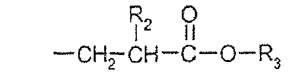 steht,
R₁ für Wasserstoff oder C₁-C₄-Alkyl steht,
R₂ für Wasserstoff oder Methyl steht,
R₃ für C₁-C₂₅-Alkyl, C₂-C₂₅-Alkenyl, durch Sauerstoff, Schwefel oder 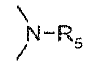 unterbrochenes C₂-C₂₅-Alkyl oder C₅-C₁₂-Cycloalkyl steht;
R₄ für C₁-C₂₄-Alkylen, C₂-C₂₄-Alkenylen oder durch Sauerstoff, Schwefel oder 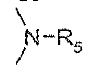 unterbrochenes C₂-C₂₄-Alkylen steht;
R₅ für Wasserstoff oder C₁-C₈-Alkyl steht,
X für -O-, -S- oder 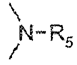 steht;
Y für -O-, -S- oder 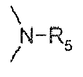 steht;
m für 0 oder 1 steht und
n für eine ganze Zahl von 2 bis 100 steht.

2. Verbindung nach Anspruch 1, worin
R₀ für 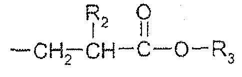 steht, R₂ für Wasserstoff oder Methyl steht,
R₃ für C₁-C₂₅-Alkyl, C₂-C₂₅-Alkenyl, durch Sauerstoff, Schwefel oder 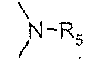 unterbrochenes C₂-C₂₅-Alkyl oder C₅-C₁₂-Cycloalkyl steht und
R₅ für Wasserstoff oder C₁-C₈-Alkyl steht.

3. Verbindung nach Anspruch 1, worin
R₃ für C₁-C₁₈-Alkyl, C₂-C₁₈-Alkenyl, durch Sauerstoff, Schwefel oder 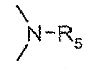 unterbrochenes C₂-C₁₈-Alkyl oder C₅-C₈-Cycloalkyl steht,
R₄ für C₁-C₁₈-Alkylen, C₂-C₁₈-Alkenylen oder durch Sauerstoff, Schwefel oder 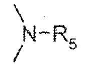 unterbrochenes C₂-C₁₈-Alkylen steht und
R₅ für Wasserstoff oder C₁-C₈-Alkyl steht.

4. Verbindung nach Anspruch 1, worin R₂ für Wasserstoff steht.

5. Verbindung nach Anspruch 1, worin R₃ für C₁-C₈-Alkyl steht.

6. Verbindung nach Anspruch 1, worin R₄ für C₂-C₈-Alkylen oder durch 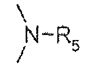 unterbrochenes C₄-C₆-Alkylen steht.

7. Verbindung nach Anspruch 1, worin X und Y für -O-stehen.

8. Verbindung nach Anspruch 1, worin
L für -X-R₄-Y- steht,
R₁ für Wasserstoff oder tert.-Butyl steht,
R₂ für Wasserstoff steht,
R₃ für C₁-C₈-Alkyl steht,
R₄ für C₂-C₈-Alkylen oder durch 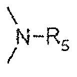 unterbrochenes
C₄-C₆-Alkylen steht,
R₅ für Wasserstoff oder Methyl steht,
X für -O- steht,
Y für -O- steht,
m für 1 steht und
n für eine ganze Zahl von 2 bis 50 steht.

9. Verfahren zur Herstellung einer polymeren Verbindung der Formel I nach Anspruch 1, bei dem man eine Verbindung der Formel II oder ein Gemisch von Verbindungen der Formel II 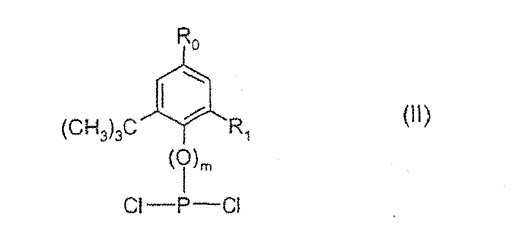 worin die allgemeinen Symbole wie in Anspruch 1 definiert sind, mit einer Verbindung der Formel III oder einem Gemisch von Verbindungen der Formel III
H-L-H (III)
worin L wie in Anspruch 1 definiert ist, umsetzt.

10. Polymeres Produkt, das durch Umsetzung einer Verbindung der Formel II oder eines Gemischs von Verbindungen der Formel II mit einer Verbindung der Formel III oder einem Gemisch von Verbindungen der Formel III 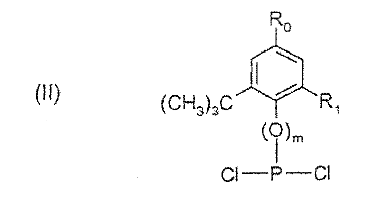
H-L-H (III)
worin die allgemeinen Symbole wie in Anspruch 1 definiert sind, erhältlich ist.

11. Zusammensetzung, enthaltend
a) ein organisches Material, das gegenüber oxidativem, thermischem oder lichtinduziertem Abbau empfindlich ist, und
b) mindestens eine polymere Verbindung der Formel I nach Anspruch 1 oder mindestens ein polymeres Produkt nach Anspruch 9.

12. Zusammensetzung nach Anspruch 11, die neben den Komponenten (a) und (b) weitere Additive enthält.

13. Zusammensetzung nach Anspruch 12, worin die weiteren Additive aus der Gruppe bestehend aus phenolischen Antioxidantien, Lichtschutzmitteln und Verarbeitungsstabilisatoren ausgewählt sind.

14. Zusammensetzung nach Anspruch 11, worin es sich bei Komponente (a) um ein natürliches, halbsynthetisches oder synthetisches Polymer handelt.

15. Zusammensetzung nach Anspruch 11, worin es sich bei Komponente (a) um ein thermoplastisches Polymer handelt.

16. Zusammensetzung nach Anspruch 11, worin Komponente (b) in einer Menge von 0,01 bis 10%, bezogen auf das Gewicht von Komponente (a), vorliegt.

17. Verfahren zum Stabilisieren eines organischen Materials gegen oxidativen, thermischen oder lichtinduzierten Abbau, bei dem man dem Material mindestens eine polymere Verbindung der Formel I nach Anspruch 1 oder mindestens ein polymeres Produkt nach Anspruch 10 einverleibt oder auf das Material aufbringt.

18. Verwendung einer polymeren Verbindung der Formel I nach Anspruch 1 oder eines polymeren Produkts nach Anspruch 10 als Stabilisator zum Schutz von organischen Materialien gegen oxidativen, thermischen oder lichtinduzierten Abbau.

## Revendications

1. Composé polymère de la formule I 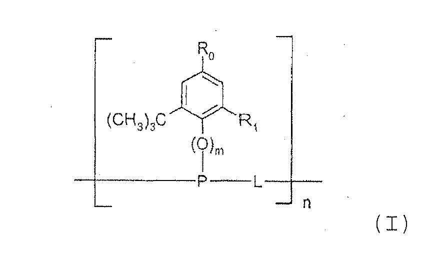 dans laquelle
L représente un groupe -X-R₄-Y-,
R₀ représente un atome d'hydrogène, un groupe alkyle de C₁ à C₂₅ ou un groupe 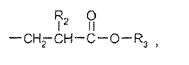
R₁ représente un atome d'hydrogène ou un groupe alkyle de C₁ à C₄,
R₂ représente un atome d'hydrogène ou un groupe méthyle,
R₃ représente un groupe alkyle de C₁ à C₂₅, alcényle de C₂ à C₂₅ ; avec un atome d'oxygène, de soufre ou un groupe alkyle de C₂ à C₂₅ interrompu par un groupe 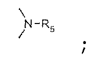 ou un groupe cycloalkyle de C₅ à C₁₂,
R₄ représente un groupe alkylène de C₁ à C₂₄, alcénylène de C₂ à C₂₄ ; avec un atome d'oxygène, de soufre ou un groupe alkylène de C₂ à C₂₄ interrompu par un groupe 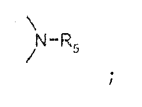
R₅ représente un atome d'hydrogène ou un groupe alkyle de C₁ à C₈,
X représente un radical -O-, -S- ou un groupe 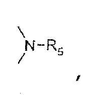
Y représente un radical -O-, -S- ou un groupe 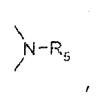
m vaut 0 ou 1, et
n représente un nombre entier de 2 à 100.

2. Composé selon la revendication 1, dans lequel
R₀ représente un groupe 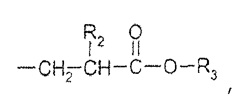
R₂ représente un atome d'hydrogène ou un groupe méthyle,
R₃ représente un groupe alkyle de C₁ à C₂₅, alcényle de C₂ à C₂₅ ; avec un atome d'oxygène, de soufre ou un groupe alkyle de C₂ à C₂₅ interrompu par un groupe 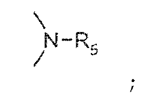 ou un groupe cycloalkyle de C₅ à C₁₂, et
R₅ représente un atome d'hydrogène ou un groupe alkyle de C₁ à C₈.

3. Composé selon la revendication 1, dans lequel
R₃ représente un groupe alkyle de C₁ à C₁₈, alcényle de C₂ à C₁₈ ; avec un atome d'oxygène, de soufre ou un groupe alkyle de C₂ à C₁₈ interrompu par un groupe 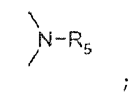 ou un groupe cycloalkyle de C₅ à C₈,
R₄ représente un groupe alkylène de C₁ à C₁₈, alcénylène de C₂ à C₁₈ ; avec un atome d'oxygène, de soufre ou un groupe alkylène de C₂ à C₁₈ interrompu par un groupe 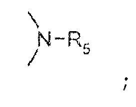 et
R₅ représente un atome d'hydrogène ou un groupe alkyle de C₁ à C₈.

4. Composé selon la revendication 1, dans lequel R₂ représente un atome d'hydrogène.

5. Composé selon la revendication 1, dans lequel R₃ représente un groupe alkyle de C₁ à C₈.

6. Composé selon la revendication 1, dans lequel R₄ représente un groupe alkylène de C₂ à C₈ ; ou avec un groupe alkylène de C₄ à C₆ interrompu par un groupe

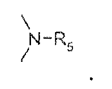

7. Composé selon la revendication 1, dans lequel X et Y représentant un radical -O-.

8. Composé selon la revendication 1, dans lequel
L représente un groupe -X-R₄-Y-,
R₁ représente un atome d'hydrogène ou un groupe tert-butyle,
R₂ représente un atome d'hydrogène,
R₃ représente un groupe alkyle de C₁ à C₈,
R₄ représente un groupe alkylène de C₂ à C₈ ; ou avec un groupe alkylène de C₄ à C₆ interrompu par un groupe 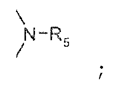 R₅ représente un atome d'hydrogène ou un groupe méthyle, X représente un radical -O-,
Y représente un radical -O-,
m vaut 1, et
n représente un nombre entier de 2 à 50.

9. Procédé de préparation d'un composé polymère de la formule I selon la revendication 1, lequel comprend la réaction d'un composé de la formule II ou d'un mélange de composés de la formule II 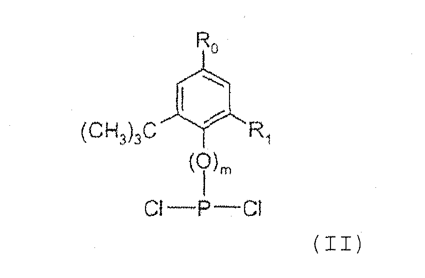 dans laquelle les symboles généraux sont tels que définis dans la revendication 1, avec un composé de la formule III ou un mélange de composés de la formule III
H-L-H (III)
dans laquelle L est tel que défini dans la revendication 1.

10. Produit polymère qui peut être obtenu par la réaction d'un composé de la formule II ou d'un mélange de composés de la formule II avec un composé de la formule III ou un mélange de composés de la formule III 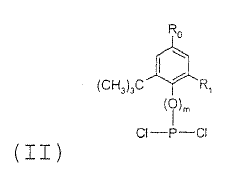
H-L-H (III)
dans laquelle les symboles généraux sont tels que définis dans la revendication 1.

11. Composition comprenant
a) un matériau organique qui est sensible à une dégradation induite par une oxydation, la chaleur ou la lumière, et
b) au moins un composé polymère de la formule I selon la revendication 1 ou au moins un produit polymère selon la revendication 9.

12. Composition selon la revendication 11 qui comprend d'autres additifs en plus des composants (a) et (b).

13. Composition selon la revendication 12, dans laquelle les autres additifs sont choisis parmi le groupe constitué d'antioxydants phénoliques, de photostabilisants et de stabilisants de traitement.

14. Composition selon la revendication 11, dans laquelle le composant (a) est un polymère naturel, semi-synthétique ou synthétique.

15. Composition selon la revendication 11, dans laquelle le composant (a) est un polymère thermoplastique.

16. Composition selon la revendication 11, dans laquelle le composant (b) est présent en une quantité de 0,01 à 10 %, basée sur le poids du composant (a).

17. Procédé pour la stabilisation d'un matériau organique contre une dégradation induite par une oxydation, la chaleur ou la lumière, lequel comprend l'incorporation dans ledit, ou l'application audit, matériau d'au moins un composé polymère de la formule I tel que défini dans la revendication 1 ou d'au moins un produit polymère selon la revendication 10.

18. Utilisation d'un composé polymère de la formule I selon la revendication 1 ou d'un produit polymère tel que défini dans la revendication 10 comme stabilisant pour protéger des matériaux organiques contre une dégradation induite par une oxydation, la chaleur ou la lumière.
